Europäisches Patentamt

**European Patent Office**

**Office européen des brevets**

(19)

(11) Numéro de publication: **0 030 181**

**B1**

(12) ## FASCICULE DE BREVET EUROPEEN

(45) Date de publication du fascicule du brevet: **27.06.84**

(51) Int. Cl.³: **C 04 B 35/66, C 04 B 13/00**

(21) Numéro de dépôt: **80401648.3**

(22) Date de dépôt: **18.11.80**

(54) **Composition pulvérulente et procédé de fabrication d'une pièce réfractaire à partir de cette composition.**

(30) Priorité: **19.11.79 FR 7928418**

(43) Date de publication de la demande:
**10.06.81 Bulletin 81/23**

(45) Mention de la délivrance du brevet:
**27.06.84 Bulletin 84/26**

(84) Etats contractants désignés:
**AT BE CH DE GB IT LI LU NL SE**

(56) Documents cités:
**FR - A - 2 390 400**

**CHEMICAL ABSTRACTS, vol. 92, no. 4 janvier 1980, page 330, abrégé 27378z Columbus, Ohio, US**

(73) Titulaire: **LAFARGE REFRACTAIRES Société Anonyme**
**99, Avenue Aristide Briand**
**F-92120 Montrouge (FR)**

(72) Inventeur: **Cochet, Gérard**
**67, rue des Ebisoires**
**Plaisir (Yvelines) (FR)**
Inventeur: **Provost, Gilbert**
**1, rue du Lieutenant Girbal**
**Les Breviares (Yvelines) (FR)**

(74) Mandataire: **Harlé, Robert et al,**
**c/o Cabinet Harlé & Phélip 21, rue de la Rochefoucauld**
**F-75009 Paris (FR)**

Courier Press, Leamington Spa, England.

## O 030 181

**Description**

La présente invention concerne un produit réfractaire façonné qui, sans qu'il soit indispensable de le cuire, présente des caractéristiques physiques, thermo-mécaniques et thermo-chimiques au moins équivalentes à celles des produits réfractaire façonnés cuits connus jusqu'à ce jour.

En évitant la cuisson, l'invention permet d'en éliminer les inconvénients qui sont notamment la dépense d'énergie, la lenteur de fabrication et une certaine imprécision des cotes provenant de déformations dues à la cuisson.

Selon l'état actuel de la technique, on prépare un mélange constitué d'une poudre granuleuse et d'eau et on le place dans un moule pour lui donner la forme voulue. Les produits ainsi obtenus sont stabilisés par cuisson à une température en général proche de la température de service afin de donner aux composants une liaison céramique et de stabiliser les produits en dimensions.

La mise en forme du mélange dans un moule implique un pressage. Or, il est bien connu de l'homme de métier qu'il est difficile d'obtenir par des moyens industriels de pressage à grand débit, une porosité inférieure à 15% alors qu'il est du plus grand intérêt d'obtenir une porosité minimale puisqu'elle conditionne, pour une grande part, les qualités des produits réfractaires.

Mais pour obtenir cette porosité inférieure à 15%, on ne dispose que de mélanges dont la répartition granulaire est difficilement compatible avec les moyens industriels de pressage.

En effet, cette répartition granulaire entraîne:
— soit un feuilletage important des produits en raison de l'air emprisonné au moment du pressage;
— soit un retrait lors de la cuisson qui atteint des valeurs intolérables;
— soit ces deux défauts à la fois.

C'est pourquoi les mélanges industriels connus ne sont qu'un compromis entre leur aptitude au façonnage industriel et les qualités des produits cuits c'est-à-dire principalement leur porosité.

Une autre méthode connue pour l'obtention de produits réfractaires, consiste à utiliser des mélanges de types béton hydraulique. Ces mélanges (composition pulvérulente et eau) sont moulés par coulage et vibration et donnent des produits qui ont des caractéristiques intéressantes pour certaines applications. Mais la proportion de liant hydraulique à base d'oxydes alcalino-terreux qu'ils doivent contenir reste relativement élevée, même si elle a pu être réduite de façon sensible, et amenuise de ce fait les qualités des produits telles que leurs caractéristiques thermo-mécaniques.

En outre, la mise en forme par coulage et vibration exclut de façonnage à grand débit dans un moule unique en raison due temps nécessaire à la prise hydraulique du béton avant démoulage.

Ainsi, on connaît par exemple le brevet français 2.390.400 qui décrit un ciment pour béton. Ce ciment a des effets tout-à-fait différents de celui de la présente demande car le coulage d'un béton dans un moule puis sa vibration, comme cela est indiqué dans ce brevet français page 3 lignes 5 à 7 par exemple, provoque un arrangement des particules selon une simple juxtaposition et non pas selon un enchevêtrement comme cela est expliqué ci-après notamment page 8 lignes 30 à 33.

Le pressage procure, effectivement, un effet par lequel les grains sont en quelque sorte "cassés" ce qui favorise cet enchevêtrement et ce qui aboutit à la création d'une sorte de "squelette". Celui-ci donne à la pièce elle-même une tenue propre et obtenue immédiatement, puis-que l'opération de démoulage ne demande pas plus de 10 à 20 secondes alors que le coulage d'un béton dans un moule demande un temps de prise d'au minimum une demi heure et plus fréquemment de trois heures, du fait que l'arrangement des particules selon une simple juxtaposition ne donne pas cet effet de "squelette" d'où la nécessité d'attendre relativement longtemps que le mélange ait pris dans un moule.

Cette opération ne peut être ni mécanisée ni automatisée contrairement au pressage industriel qui peut être effectué au moyen de machines à cycle répétitif et de grand rendement.

Ces différences viennent de la composition elle-même comme cela ressort des explications données dans le brevet français 2.390.400, page 1 lignes 15 à 24 où il est précisé, sans équivoque, que la granulométrie recherchée empêche la formation de gels ou de sols, cette précision étant répétée page 3, lignes 27 et 28.

Ceci est contraire aux caractéristiques de l'invention telles qu'elles sont données ci-après page 8 lignes 6 à 9 et lignes 13 à 23.

Cette différence profonde dans la nature des deux inventions provient des compositions qui sont tout-à-fait différentes.

En effet, selon le brevet 2.390.400, il est indispensable d'associer deux constituants minéraux, dont la nature est peu importante, dans deux plages de granulométrie extrêmement précise. L'invention décrite dans ce brevet impose la présence dans le ciment non mélangé à un agrégat, d'une charge inerte.

Selon l'invention, au contraire, la composition destinée à être mélangée à un agrégat ne comprend que deux composants et un agent fluidifiant, l'un de ces composants devant avoir une granulométrie fine mais non rigoureusement enfermée dans une fourchette précise.

Il faut également noter que le rapport silice/ciment a une valeur comprise entre 0,5 et 5,4 dans le brevet français 2.390.400 (calcul résultant de la revendication 1) alors que selon la présente invention,

2

**0 030 181**

ce même rapport a une valeur qui va de 24 à 2,33 selon les calculs qui résultent des indications précises de la revendication 1.

On connaît également le brevet japonais 79/113.617 (resumé publié dans Chemical Abstracts) qui concerne une composition devant obligatoirement être cuite alors que celle qui résulte de l'invention est surtout destinée à être utilisée à l'état cru, la cuisson n'étant qu'un complément favorable, certes, mais non indispensable.

Le résultat atteint à l'égard de la porosité n'est que de 15% après cuisson alors que selon l'invention on obtient 13,5 de porosité avec un simple étuvage à 110°. Cela résulte d'une différence de composition puisque dans le brevet japonais un ciment alumineux est présent à raison de 8% alors que selon la présente demande un ciment alumineux, en tant que composé apportant des oxydes alcalino-terreux, n'est présent que dans la proportions de 0,1 à 1% ce qui montre une différence complète dans la nature même des compositions en cause et des phénomènes physico-chimiques mis en jeu.

Le brevet japonais prévoit de la silice à raison de 4% alors que selon la présente demande cette silice est présente dans une proportion qui va de 1,4 à 19,2. Dans ce brevet, les proportions entre la silice et le ciment sont exactement inverses de celles de l'invention. En effet, selon le brevet japonais, il y a 4% de silice et 8% de ciment alumineux, soit un rapport de 0,5 alors que selon la présente demande les quantités de silice (1,4 à 19,2) et les quantités de ciment (0,1 à 1), en taut que composé apportant des oxydes alcalino-terreux, donnent des rapports de 24 à 2,33 (voir revendication 1).

Selon l'invention un composé apportant des oxydes alcalino-terreux, tel qu'un ciment doit être présente dans une quantité minimum, ce qui se matérialise dans la proportion 0,08 à (2%, de préférence 0,1 à 1%, et ce qui est incompatible avec la quantité aussi importante que 8% décrite dans le brevet japonais.

La composition selon l'invention consiste en deux produits très précis et un agent fluidifiant en vue de leur mélange à un agrégat et à une faible quantité d'eau, pour l'obtention d'un gel qui est formé en place. L'utilisation du pressage procure des pièces prêtes à l'emploi en un temps très court, permettant l'utilisation d'un système mécanisé, automatique et industriel, la composition de ces produits ne rendant pas indispensable leur stabilisation par cuisson.

A cet effet, l'invention concerne une composition pulvérulente devant être mélangée à un agrégat réfractaire et à de l'eau en vue de l'obtention par pressage de pièces réfractaires telles que des briques pour la construction d'enceintes thermiques, caractérisée en ce qu'elle ne comprend que trois constituants qui sont d'une première part 70 à 96% en poids de silice soit vitreuse soit amorphe dont les particules ont un diamètre inférieur à 1 $\mu$m, d'une deuxième part 4 à 30% en poids d'un composé apportant 1 à 20% en poids d'oxydes alcalino-terreux et, d'une troisième part, 0,5 à 3% en poids d'un agent fluidifiant.

On solubilise cette silice par activation au moyen d'eau et l'hydrolyse qui en résulte conduit, par séchage, à la précipitation du gel formé.

La silice associée à une petite part d'éléments favorisant sa solubilisation constitue un liant pour agrégat réfractaire.

Parmi les éléments favorisant la solubilisation de la silice on utilise, avantageusement, des ions alcalino-terreux apportés, de préférence, par un ciment.

Cet ensemble contient un agent fluidifiant ou "dispersant" permettant la défloculation de la fraction fine et ultrafine des constituants pour faciliter la répartition homogène de toutes les particules, ce qui permet de limiter la quantité de liant par rapport à l'ensemble.

La défloculation génère, en outre, une action lubrifiante qui permet de diminuer la quantité d'eau théoriquement nécessaire à l'arrangement des particules par compactage.

Selon une caractéristique de l'invention, une composition pulvérulente telle que définie ci-dessus, à usage de liant, est mélangée à un agrégat réfractaire dont 5% en poids au moins sont constitués de particules de diamètre inférieur à 20 $\mu$m, cet agrégat représentant 80 à 98% du poids total de l'ensemble et ce mélange contenant ainsi de la silice soit vitreuse soit amorphe dont les particules ont un diamètre inférieur à 1 $\mu$m à raison de 1,4 à 19,2% en poids, un composé apportant des oxydes alcalino-terreux à raison de 0,08 à 2% en poids et un agent fluidifiant à raison de 0,01 à 0,6% en poids.

L'invention concerne plus précisément une telle composition qui contient 0,1 à 1% en poids d'un composé apportant des oxydes alcalino-terreux et selon une variante, 4 à 10% en poids de silice soit vitreuse soit amorphe.

Le liant et l'agrégat réfractaire parfaitement mélangés sont additionnés d'eau, comme dit ci-dessus, et l'ensemble est compacté dans un moule sous une pression de de 300 à 500 bars atteinte rapidement et maintenue pendant un temps court afin d'obtenir une pièce réfractaire telle qu'une brique pour la construction d'enceintes thermiques.

On obtient une liaison particulière par l'hydrolyse de la silice vitreuse (ou amorphe) ultra-fine, répartie de façon homogène entre les particules de l'agrégat, en présence d'une faible quantité d'ions alcalino-terreux. Cette hydrolyse conduit à la formation d'un gel qui précipite au cours du séchage en cimentant les particules.

Les ions alcalino-terreux sont de préférence apportés par un ciment qui peut n'être présent qu'en quantité extrêment faible (moins de 1% en poids de l'ensemble liant-agrégat).

3

En effect, l'action d'hydrolyse avec formation de gel puis consolidation par séchage, décroît lorsque la teneur en alcalino-terreux croît.

Inversement, lorsque la teneur en alcalino-terreux croît, une réaction du type pouzzolanique apparaît.

Ici, l'effet pouzzolanique peut être classique, c'est-à-dire obtenu par fixation, sous forme de silicate de chaux, par la silice fine de la Portlandite résultant de l'hydratation d'un ciment Portland ou obtenu par l'hydratation en présence de silice fine en grande quantité d'un ciment alumineux (réfractaire) sous forme de pseudo-géhlénite hydratée.

La présence de ces silicates de chaux ou silico-aluminate de chaux est défavorable à la réfractarité des produits et doit être réduite autant que faire se peut. Cet abaissement de réfractarité se traduit notamment par un abaissement sensible de la température d'affaissement sous charge, caractéristique essentielle des produits réfractaires en rapport avec la température limite d'emploi.

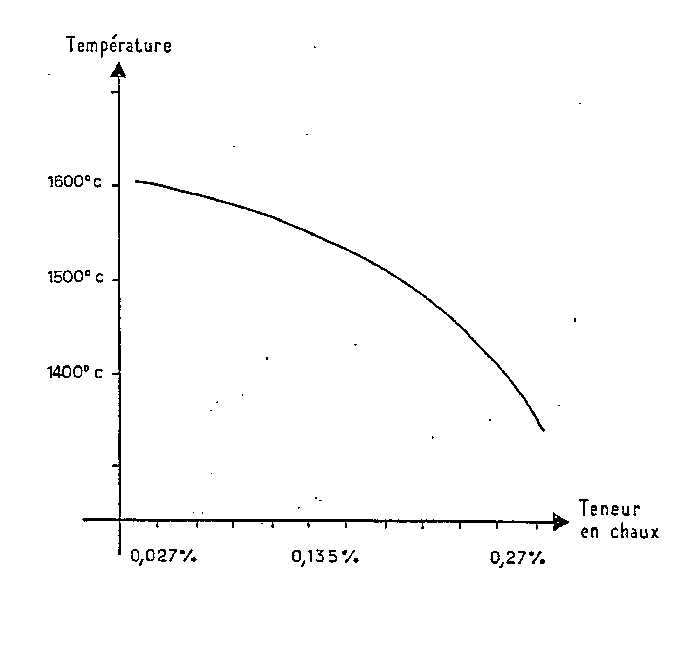

Ce phénomène est illustré, à titre indicatif, par la figure unique du dessin annexé. Ce dessin représente une courbe de variation de température d'affaissement sous charge (en ordonnée) de produits réfractaires obtenus avec des compositions conformes à l'invention et réalisées avec un même agrégat, en fonction de la teneur en chaux (en abscisse) de ces compositions.

La température indiquée est celle à laquelle se produit un affaissement de 0,5% sous une charge de 2 daN cm$^{-2}$, mesuré par la méthode différentielle (norme AFNOR NFB 49—105 et norme ISO R 1893).

La teneur en chaux indiquée est celle qui résulte de l'emploi d'un ciment alumineux contenant environ 70% d'alumine et 27% de chaux. Ce ciment est, ici, celui connu sous le nom de "SECAR 71".

Comme le montre cette courbe, il suffit de très peu de chaux pour provoquer un abaissement sensible de la température d'affaissement sous charge.

En effet, lorsque la teneur en chaux passe de 0,027% à 0,135%, la température d'affaissement sous charge tombe de 50°C. Lorsqu'elle passe de 0.135% à 0,270% cette température tombe de 150°C.

En d'autres termes, plus la teneur en chaux d'une composition est élevée, plus les performances des produits réfractaires obtenus sont faiblès .

Certaines caractéristiques (cohésion à froid après séchage, par exemple) des produits conformes à l'invention peuvent être obtenues de deux façons.

— en profitant de la liaison par gel, c'est-à-dire en fixant la composition dans la zone à teneur faible en alcalino-terreux, cette liaison étant associée à une bonne densification du produit;

— en profitant inversement de l'effet pouzzolanique en n'utilisant que la quantité de ciment strictement nécessaire au développement sensible de cet effet.

La liaison par des gels de silice est bien connue de l'homme de métier. Mais l'invention ne peut pas être assimilée à la technique antérieure. En effet, les gels de silice connus contiennent une grande quantité d'eau et un faible concentration en matière active. En conséquence, leur emploi apporte une grande quantité d'eau qui est très défavorable puisqu'elle donne aux produits une porosité élevée et une faible cohésion mécanique.

Selon l'invention, le gel est formé en place, avec la seule et même eau que celle qui est nécessaire à l'humidification du mélange.

Pour obtenir les meilleurs résultats de l'invention, il s'avère important de combiner:

— la bonne répartition granulométrique jusqu'aux particules ultra-fines;

— la fluidification des composants pour l'obtention d'une bonne homogénéité malgré un faible apport d'eau;

— le pressage du mélange à valeur suffisante pour provoquer la liaison des particules par rapprochement, voire enchevêtrement et pour cimenter, par le gel formé, les fines particules.

L'invention procure des produits crus dont les caractérisques thermo-mécaniques sont au moins égales à celles des produits cuits de la technique conne.

En outre, l'invention procure un avantage supplémentaire par rapport aux produits connus à l'égard de la densité et de la porosité.

Les faibles porosités qu'il est possible d'obtenir selon la technique connue proviennent de l'effet de frittage des particules entre elles et cet effet se traduit par de forts retraits lors de la cuisson, ce qui a pour conséquence une grande difficulté à respecter rigoureusement les cotes prévues et à éviter les déformations.

Les produits crus conformes à l'invention peuvent avoir des porosités de l'ordre de 10%. Ces mêmes produits si on les cuit, peuvent voir leur porosité tomber à 5% sans retrait supérieur à 1%, ce qui représente une très bonne performance.

Les proportions des composants conformes à l'invention sont les suivantes:

| | |
|---|---|
| — agrégat réfractaire | 80 à 98% en poids |
| — liant | 2 à 20% en poids |

dont:

| | |
|---|---|
| · silice vitreuse (ou amorphe) | 1,4 à 19,2% en poids |
| · oxydes alcalino-terreux apportés de préférence par un ciment | 0,02 à 1,3% en poids |
| · agent fluidifiant | 0,01 à 0,6% en poids. |

La nature de l'agrégat réfractaire est identique à celle habituellement utilisée et choisie en fonction de l'application envisagée, ainsi que cela est bien connu de l'homme de métier.

Une caractéristique de l'invention est que, pour assurer la bonne répartition granulométrique des particules, l'agrégat contienne une fraction sensible de particules ultra-fines (diamètre inférieur à 20 $\mu$m). En fonction de la teneur en liant, le résultat est en général atteint avec une proportion comprise entre 5 et 25% du poids total de l'agrégat.

On va maintenant donner trois exemples chiffrés. Le ciment "SECAR" 71" cité est un ciment alumineux à 70% d'alumine et 27% de chaux commercialisé par la Société LAFARGE FONDU INTERNATIONAL.

### Exemple 1

| | |
|---|---|
| — Alumine tabulaire  < 3,3 mm | 89,5% |
| — Alumine fine  < 20 $\mu$m | 5% |
| — Liant | 5,5% |

| dont: | | |
|---|---|---|
| — polyacrylate de sodium | 0,03% |
| — ciment "SECAR 71" | 1,5% |
| — silice vitreuse  < 0,1 $\mu$m | 3,97% |

Ajout:

| | |
|---|---|
| — Eau | 2.7% |

Ces différents composants sous introduits dans un mélangeur de tout type connu et le mélange obtenu est placé, selon la technique connue, dans un moule subissant l'action d'une presse hydraulique ou mécanique à grand débit sous une pression de 400 bars.

Les produits obtenus ont les caractéristiques suivantes:

| Traitement thermique | 110°C | 600°C | 1000°C | 1400°C | 1500°C | 1600°C |
|---|---|---|---|---|---|---|
| Masse volumique apparente g.cm$^{-3}$ | 3,18 | 3,16 | 3,17 | 3,15 | 3,17 | 3,23 . |
| Porosité ouverte en % | 13,5 | 14,4 | 14,2 | 12,7 | 11 | 6,2 |
| Variations linéaires de dimensions en % | — | 0 | —0,1 | —0,05 | —0,3 | —0,5 |
| Résistance à la flexion à 20°C daN.cm$^{-2}$ | 136 | 170 | 460 | 503 | 474 | 638 |
| Affaissement sous charge 0,5% | 1400°C | — | — | — | 1550°C | — |

### Exemple 2

— Alumine tabulaire  < 3,3 mm                                    90%

— Alumine fine   < 20 $\mu$m                                     5%

— Liant                                                         5%

    dont: — polyacrylate de sodium      0,05%

           — ciment "SECAR 71"           0.1%

           — silice vitreuse   < 0,1 $\mu$m    4,85%

Ajout:

— Eau                                                           3,2%

Après préparation comme dans l'exemple 1 et façonnage à 400 bars, les produits obtenus ont les caractéristiques suivantes:

| Traitement thermique | 110°C | 1400°C | 1500°C |
|---|---|---|---|
| Masse volumique apparente g.cm$^{-3}$ | 3,14 | 3,21 | 3,23 |
| Porosité ouverte en % | 13 | 11 | 9,5 |
| Variations linéaires de dimensions en % | 0 | —0,4 | —0,5 |
| Résistance à la flexion à 20°C daN.cm$^{-2}$ | 72 | 490 | 550 |
| Affaissement sous charge 0,5% | 1600°C | 1670°C | — |

### Exemple 3

— Alumine tabulaire < 3,3 mm                                    90%

— Alumine fine   < 20 $\mu$m                                     4,8%

— Liaison suivant invention                                     5,2%

    dont: — polyacrylate de sodium      0,05%

           — ciment "SECAR 71"           0,5%

           — silice vitreuse   < 0,1 $\mu$m    4,65%

En ajout:

— Eau                                                           3,3%

| Traitement thermique | 110°C | 1600°C |
|---|---|---|
| Masse volumique apparente g.cm$^{-3}$ | 3,20 | 3,25 |
| Porosité ouverte en % | 12,6 | 10,1 |
| Variations linéaires de dimensions en % | — | —0,45 |
| Résistance à la flexion à 20°C daN.cm$^{-2}$ | 112 | 473 |
| Affaissement sous charge 0,5% | 1550°C | |

Comparaisons des caractéristiques avec des produits cuits
équivalents de la technique antérieure:

| Type de produit | 90% $Al_2O_3$ | 95% $Al_2O_3$ | 95% $Al_2O_3$ | 95% $Al_2O_3$ | 95% $Al_2O_3$ |
|---|---|---|---|---|---|
| Liaison | à base d'argile, par cuisson (technique connue) | mullitique par cuisson (technique connue) | crue, selon l'invention 0,1% ciment | crue, selon l'invention 0,5% ciment | selon l'invention après cuisson 0,1% ciment |
| Densité | 3,0 | 3,15 | 3,17 | 3,20 | 3,27 |
| Porosité | 18/19 | 16 | 13/14 | 12/13 | 9/10 |
| Résistance à la flexion 20°C daN.cm$^{-2}$ | 150 | 180 | 90 | 110 | 450 |
| Résistance à la flexion 1500°C daN.cm$^{-2}$ | 20 | 70 | 65 | 50 | 95 |
| Affaissement sous charge 0,5% | 1620°C | 1650°C | 1600°C | 1550°C | 1670°C |

Comme on peut le constater sur le tableau ci-dessus, les caractéristiques essentielles des produits crus à 95% $Al_2O_3$ sont identiques, voire supérieures, à celles des produits classiques cuits. Les propriétés des produits conformes à l'invention cuits à 1500°C sont nettement supérieures, à tous les niveaux, à celles des produits équivalents de la technique antérieure.

Les produits conformes à l'invention après stockage suffisant pour permettre la prise, sont séchés pour éliminer l'eau libre. Ils peuvent, accessoirement bien entendu, être cuits, ce qui peut encore améliorer leurs caractéristiques mais la cuisson n'offre pas intérêt majeur et augmente considérablement le coût.

L'invention n'est pas limitée aux seuls modes de réalisation décrits mais en embrasse, au contraire, toutes les variantes.

**Revendications**

1. Composition pulvérulente devant être mélangée à un agrégat réfractaire et à de l'eau en vue de l'obtention de pièces réfractaires telles que des briques pour la construction d'enceintes thermiques, caractérisée en ce qu'elle ne comprend que trois constituants qui sont d'une première part 70 à 96% en poids de silice soit vitreuse soit amorphe dont les particules ont un diamètre inférieur à 1 $\mu$m, d'une deuxième part 4 à 30% en poids d'un composé apportant 1 à 20% en poids d'oxydes alcalino-terreux et, d'une troisième part, 0,5 à 3% en poids d'un agent fluidifiant.

2. Composition pulvérulente à usage de liant selon la revendication 1 caractérisée en ce qu'elle est mélangée à un agrégat réfractaire dont 5% en poids au moins sont constitués de particules diamètre inférieur à 20 $\mu$m, cet agrégat représentant 80 à 98% du poids total de l'ensemble et ce mélange contenant ainsi de la silice soit vitreuse soit amorphe dont les particules ont un diamètre inférieur à 1 $\mu$m à raison de 1,4 à 19,2% en poids, un composé apportant des oxydes alcalino-terreux à raison de 0,08 à 2% en poids et un agentfluidifiant à raison de 0,01 à 0,6% en poids.

3. Composition pulvérulente selon la revendication 2, caractérisée en ce qu'elle contient 0,1 à 1% en poids d'un composé apportant des oxydes alcalino-terreux, et 4 à 10% en poids de silice soit vitreuse soit amorphe.

4. Procédé de fabrication d'une pièce rétractaire à partir d'une composition pulvérulente selon l'une quelconque des revendications 2 ou 3 par addition d'eau et compactage de l'ensemble dans un moule sous une pression de 300 à 500 bars.

**Claims**

1. Pulverulent composition for mixing with a refractory aggregate and water for obtaining refractory elements such as bricks for construction of thermal enclosures, characterised in that it firstly comprises 70 to 96% by weight of either vitreous or amorphous silica the particles of which have a diameter smaller than 1 $\mu$m, secondly 4 to 30% by weight of a compound providing from 1 to 20% by weight of alkaline earth oxides and, thirdly, 0.5 to 3% by weight of a fluidising agent.

2. Pulverulent composition for use as a binder according to claim 1, characterised in that it is mixed with a refractory aggregate of which at least 5% by weight is formed by particles having a smaller diameter than 20 $\mu$m, this aggregate representing 80 to 98% of the total weight of the whole and this mixture thus containing either vitreous or amorphous silica the particles of which have a diameter smaller than 1 $\mu$m in the proportion of 1.4 to 19.2% by weight, a compound providing alkaline earth oxides in the proportion of 0.08 to 2% by weight, and a fluidising agent in the proportion of 0.01 to 0.6% by weight.

3. Pulverulent composition according to claim 2, characterised in that it contains 0.1 to 1% by weight of a compound providing alkaline earth oxides and 4 to 10% by weight of either vitreous or amorphous silica.

4. Element obtained from a pulverulent composition according to either one of the above claims 2 or 3.

### Patentansprüche

1. Pulverförmige Zusammensetzung zum Vermischen mit einem feuerfesten Zuschlag und mit Wasser zur Herstellung von feuerfesten Formkörpern, zum Beispiel Ziegeln für den Bau von thermischen Sicherheitshüllen, gekennzeichnet durch erstens 70 bis 90 Gew.% glasartiges oder amorphes Siliciumoxid, dessen Teilchen einen Durchmesser von weniger als 1 $\mu$m haben, durch zweitens 4 bis 30 Gew.% einer Verbindung, die 1 bis 20 Gew.% an erdalkalischen Oxiden liefert, und drittens 0,5 bis 3 Gew.% eines Verflüssigungsmittels.

2. Pulverförmige Zusammensetzung zur Verwendung als Bindemittel nach Anspruch 1, dadurch gekennzeichnet, daß sie mit einem feuerfesten Zuschlag vermischt ist, von dem wenigstens 5 Gew.% aus Teilchen mit einem Durchmesser von weniger als 20 $\mu$m bestehen, daß der Zuschlag 80 bis 90% des Gesamtagewichts des Ganzen darstellt und daß dieses Gemisch somit enthält: glasartiges oder amorphes Siliciumoxid zu 1,4 bis 19,2 Gew.%, dessen Teilchen einen Durchmesser von weniger als 1 $\mu$m haben, eine ardalkalische Oxide liefernde Verbindung zu 0,08 bis 2 Gew.% und ein Verflüssigungsmittel zu 0,01 bis 0,6 Gew.%

3. Pulverförmige Zusammensetzung nach Anspruch 2, dadurch gekennzeichnet, daß sie 0,1 bis 1 Gew.% einer erdalkalische Oxide liefernden Verbindung und 4 bis 10 Gew.% glasartiges oder amorphes Siliciumoxid enthält.

4. Formkörper dadurch gekennzeichnet, daß er aus einer pulverförmigen Zusammensetzung nach einem der Ansprüche 2 oder 3 hergestellt ist.